(19)

Europäisches
Patentamt
European
Patent Office
Office européen
des brevets

(11) **EP 4 167 152 A1**

(12) **EUROPEAN PATENT APPLICATION**
published in accordance with Art. 153(4) EPC

(43) Date of publication:
**19.04.2023 Bulletin 2023/16**

(21) Application number: **21834057.8**

(22) Date of filing: **30.06.2021**

(51) International Patent Classification (IPC):
***G06Q 10/04*** (2023.01)     ***G06Q 50/06*** (2012.01)
***H02S 10/00*** (2014.01)

(52) Cooperative Patent Classification (CPC):
Y02E 10/56; Y04S 50/14

(86) International application number:
**PCT/CN2021/103575**

(87) International publication number:
**WO 2022/002136 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.07.2020 CN 202010623222**

(71) Applicant: **CGN Wind Power Co. Ltd
Beijing 100071 (CN)**

(72) Inventors:
• **FAN, Zhongyao**
  **Beijing 100071 (CN)**
• **MU, Juan**
  **Beijing 100071 (CN)**
• **YI, Jinyin**
  **Beijing 100071 (CN)**
• **LI, Qian**
  **Beijing 100071 (CN)**
• **NING, Hongtao**
  **Beijing 100071 (CN)**
• **NIU, Haifeng**
  **Beijing 100071 (CN)**
• **MA, Chi**
  **Beijing 100071 (CN)**
• **TANG, Jianfang**
  **Beijing 100071 (CN)**

(74) Representative: **Reitstötter Kinzebach
Patentanwälte
Sternwartstrasse 4
81679 München (DE)**

(54) **OPTIMIZATION DESIGN METHOD FOR PHOTOVOLTAIC SYSTEM BY TAKING SYSTEM BENEFIT OPTIMIZATION AS TARGET**

(57) Disclosed is an optimization design method for a photovoltaic system by taking system benefit optimization as a target. The optimization design method comprises: how to select the type of a photovoltaic module, the form of an inverter, the arrangement means of the module, the tracking form of a support and a module-inverter capacity ratio value to achieve the benefit optimization of a photovoltaic system, wherein the model selection of each apparatus and parameter of the system is obtained by means of optimization iteration by taking an inclination angle as an iteration variable and taking a system benefit as an optimization design target under all the above combination means. The method has the advantages of the benefit of the photovoltaic system being taken as the optimization design target, and that the influences of the type of the system module, the form of the inverter, the module arrangement and tracking form, the capacity ratio, the land cost, the power station operation and maintenance cost, etc. on the benefit of the photovoltaic system are comprehensively considered, thereby acquiring the optimal photovoltaic system design solution.

EP 4 167 152 A1

Switch a photovoltaic module, an inverter, an arrangement as well as a photovoltaic bracket

A value of an inclination angle plus 1

Calculate an amount of light of an inclined plane, an amount of generated power, a floor area and cost

Yes                 No

Optimal capacity ratio

An optimal system profit?

Compare system profits respectively corresponding to combinations

Determine a final configuration of the photovoltaic system

**Figure 1**

**Description**

The present application claims priority to Chinese Patent Application No.202010623222.4, titled "OPTIMIZATION DESIGN METHOD FOR PHOTOVOLTAIC SYSTEM BY TAKING SYSTEM BENEFIT OPTIMIZATION AS TARGET", filed on July 01, 2020 with the China National Intellectual Property Administration, which is incorporated herein by reference in its entirety.

**FIELD**

The present disclosure relates to the technical field of solar power generation, and in particular to a method for optimizing a photovoltaic system aiming at an optimal system revenue.

**BACKGROUND**

Currently, a photovoltaic system is normally designed in the following two steps. In a first step, the system is arranged aiming at maximum power generation, and parameters are determined based on construction conditions in some projects. In a second step, on the basis of the arrangement, an investment profit of a project is calculated according to investment, as well as operation and maintenance costs. In addition to the above two steps, the photovoltaic system is optimized as required in some projects.

Multiple examples show that maximum power generation does not correspond to a maximum investment profit. For example, in a project, power generation is maximum at an inclination angle of 35°. However, an internal rate of return is the largest at an inclination angle of 25°, leading to a higher profit than that at the inclination angle of 35°.

Therefore, there is a desire for a method for optimizing a photovoltaic system aiming at an optimal power station profit that investors express most concern about, throughout the whole service life of the photovoltaic system. In the method, automatic optimization is performed based on all main factors affecting the construction and operation of the photovoltaic system, so as to automatically optimize all main parameters for system design.

**SUMMARY**

A method for optimizing a photovoltaic system aiming at an optimal system revenue is provided according to the present disclosure, to solve the problems in the conventional technology.

In order to achieve the above object, the following technical solutions are provided according to the present disclosure.

A method for optimizing a photovoltaic system aiming at an optimal system revenue includes: S 1, for each of multiple combinations for the photovoltaic system, calculating an evaluation parameter and an optimal capacity ratio at an inclination angle, where the evaluation parameter and the optimal capacity ratio are calculated with the inclination angle as an iterative variable; S2, for each of the multiple combinations, determining a value of the inclination angle corresponding to an optimal system revenue and determining a configuration of the photovoltaic system corresponding to the value, and calculating a system revenue corresponding to the combination; and comparing system revenues corresponding to the multiple combinations to determine a final configuration of the photovoltaic system.

In an embodiment, each of the multiple combinations includes: a type of a photovoltaic module, a type of an inverter, a manner in which the photovoltaic module is arranged, a type of the photovoltaic bracket, and a setting of the capacity ratio.

In an embodiment, the evaluation parameter includes an amount of radiation on an inclined plane, an amount of generated power, a floor area of a power station and a system cost.

In an embodiment, the capacity ratio is a module-inverter ratio, and the calculating the optimal capacity ratio includes: A, calculating an actual output power of a photovoltaic module corresponding to the combination with a random amount of radiation and at a random temperature; B, calculating an actual output power of an inverter corresponding to the combination based on a rated output power of the inverter; and C, calculating system revenues of the photovoltaic system corresponding to different capacity ratios for the combination, and comparing the system revenues to determine the optimal capacity ratio for the combination.

In an embodiment, the system revenue of the photovoltaic system depends on all or part of: a type of the photovoltaic module, a type of an inverter, a type of the photovoltaic bracket, a construction cost, a project cost, a land cost, a delivery cost, a cost of operation and maintenance, currency inflation and taxes.

In an embodiment, an iteration step size of the inclination angle is 1°.

In an embodiment, the photovoltaic module includes a monocrystalline silicon photovoltaic module, a polycrystalline silicon photovoltaic module and a double-glass photovoltaic module. The inverter includes a centralized inverter, a string inverter and a distributed inverter. The photovoltaic module is arranged in different horizontal and vertical components in an array. The photovoltaic bracket includes a fixed bracket, an adjustable bracket, and a tracking bracket.

A method for optimizing a photovoltaic system aiming at an optimal system revenue is provided according to the present disclosure. A photovoltaic bracket of the photovoltaic system is a fixed bracket or an adjustable bracket. The method includes: S1, for each of multiple combinations for the photovoltaic system, acquiring an evaluation parameter and an optimal capacity ratio at an inclination angle by calculating the evaluation parameter and the optimal capacity ratio at the inclination angle, where the evaluation parameter and the optimal capacity ratio are calculated with the inclination angle as an iterative variable; S2, according to the evaluation parameters and the optimal capacity ratio of each combination under different inclination angles, calculating system revenue of each combination, and determining the inclination angle and the capacity ratio corresponding to the optimal value of the system revenue of each combination; and S3, comparing system revenues corresponding to the multiple combinations, and selecting a combination corresponding to a maximum system revenue, and a value of the inclination angle and a capacity ratio that correspond to the selected combination as a final configuration of the photovoltaic system.

In an embodiment, each of the multiple combinations includes: a type of a photovoltaic module, a type of an inverter, a manner in which the photovoltaic module is arranged, a type of the photovoltaic bracket, and a setting of the capacity ratio.

The evaluation parameter includes an amount of radiation on an inclined plane, an amount of generated power, a floor area of a power station and a system cost.

The capacity ratio is a module-inverter ratio, and the calculating the optimal capacity ratio includes: A, calculating an actual output power of a photovoltaic module corresponding to the combination with a random amount of radiation and at a random temperature; B, calculating an actual output power of an inverter corresponding to the combination based on a rated output power of the inverter; and C, calculating system revenues of the photovoltaic system corresponding to different capacity ratios for the combination, and comparing the system revenues to determine the optimal capacity ratio for the combination.

In an embodiment, the system revenue depends on all or part of a type of the photovoltaic module, a type of an inverter, a type of the photovoltaic bracket, a construction cost, a project cost, a land cost, a delivery cost, a cost of operation and maintenance, currency inflation and taxes.

In an embodiment, an iteration step size of the inclination angle is 1°.

In an embodiment, the photovoltaic module includes a monocrystalline silicon photovoltaic module, a polycrystalline silicon photovoltaic module and a double-glass photovoltaic module. The inverter includes a centralized inverter, a string inverter and a distributed inverter. The photovoltaic module is arranged in different horizontal and vertical components in an array. The photovoltaic bracket includes a fixed bracket, as well as an adjustable bracket.

In an embodiment, the photovoltaic bracket is the adjustable bracket. The value of the inclination angle and the capacity ratio that correspond to the system revenue are acquired by enumeration method.

A method for optimizing a photovoltaic system aiming at an optimal system revenue is further provided according to the present disclosure. The photovoltaic bracket is a vertical single axis tracking bracket, an oblique single axis tracking bracket, or a flat uniaxial bracket.

The method includes: S 1, for each of multiple combinations for the photovoltaic system, acquiring an evaluation parameter at an inclination angle by calculating the evaluation parameter at the inclination angle, where the evaluation parameter at the inclination angle is calculated with the inclination angle as an iterative variable, the inclination angle is an angle at which a photovoltaic module leans in case of the vertical single axis tracking bracket, and the inclination angle is an angle at which an oblique axis leans in the case of oblique single axis tracking bracket or flat uniaxial bracket; S2, for each of the multiple combinations, calculating a system revenue based on the evaluation parameter at the inclination angle, where the system revenue is calculated with the inclination angle as the iterative variable, and determining a value of the inclination angle corresponding to an optimal system revenue; and S3, comparing system revenues corresponding to the multiple combinations, and selecting a combination corresponding to a maximum system revenue, and a value of the inclination angle corresponding to the selected combination as a final configuration of the photovoltaic system.

Each of the multiple combinations includes: a type of a photovoltaic module, a type of an inverter, a manner in which the photovoltaic module is arranged, and a type of the photovoltaic bracket. The evaluation parameter includes an amount of radiation, an amount of generated power, a floor area of a power station and a system cost that corresponding to the photovoltaic bracket.

A method for optimizing a photovoltaic system aiming at an optimal system revenue is further provided according to the present disclosure. A photovoltaic bracket of the photovoltaic system is a flat uniaxial bracket or a biaxial bracket. The method includes: S1, for each of multiple combinations for the photovoltaic system, acquiring an evaluation parameter corresponding to the combination; S2, for each of the multiple combinations, calculating system revenue corresponding to the combination based on the evaluation parameter corresponding to the combination; and; S3, comparing system revenues corresponding to the multiple combinations, and selecting a combination corresponding to a maximum system revenue as a final configuration of the photovoltaic system.

Each of the multiple combinations includes: a type of a photovoltaic module, a type of an inverter, a manner in which the photovoltaic module is arranged, and a type of the photovoltaic bracket. The evaluation parameter includes an amount of radiation, an amount of generated power, a floor area of a power station and a system cost that corresponding to the photovoltaic bracket.

Compared with the conventional technology, the technical solutions according to the present disclosure have the following beneficial effects. 1. The optimization aims at the system investment profit, and automatic optimization is performed based on all major system parameters including a type of the photovoltaic module, a type of the inverter, a manner in which the photovoltaic module is arranged, and a type of the photovoltaic bracket. 2. The optimization involves not only the photovoltaic module, the inverter, arrangement in the system, an angle at which the photovoltaic bracket leans, but also automatic optimization for the module-inverter capacity ratio. 3. An appropriate optimization algorithm is adopted, to greatly improve the optimization efficiency while ensuring the optimization effect. 4. The results show that compared with the traditional method aiming at power generation, the profit can be increased by more than 1.06% with the method aiming at the optimal system revenue, for example, the internal rate of return (IRR). The increase in the profit is significant in areas with worse light resources. The method aiming at the optimal system revenue is vital for further reducing the cost of electricity and increasing the profit under the background of the photovoltaic bidding project currently.

**BRIEF DESCRIPTION OF THE DRAWINGS**

Figure 1 is a schematic diagram illustrating optimization according to an embodiment of the present disclosure;

Figure 2 is a flowchart illustrating a method for optimizing a photovoltaic system according to an embodiment of the present disclosure;

Figure 3 is a flowchart illustrating a method for optimizing a photovoltaic system according to another embodiment of the present disclosure; and

Figure 4 is a flowchart illustrating a method for optimizing a photovoltaic system according to another embodiment of the present disclosure.

**DETAILED DESCRIPTION**

In order to make objects, technical solutions and advantages of the present disclosure clearer, the present disclosure is further described in detail with reference to the drawings hereinafter. It should be understood that the embodiments described herein are only for explaining the present disclosure, rather than limiting the present disclosure.

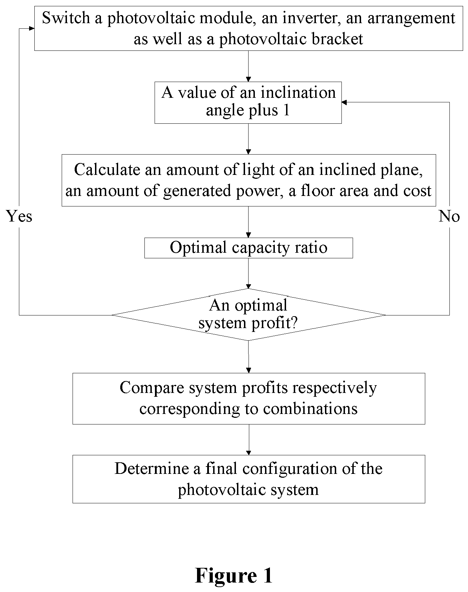

Reference is made to Figure 1, which is a schematic diagram illustrating optimization according to an embodiment of the present disclosure.

In step S 1, for each of multiple combinations for a photovoltaic system, an evaluation parameter and an optimal capacity ratio that correspond to the combination are calculated at an inclination angle, where the inclination angle serves as an iterative variable for calculation.

In step S2, for each of the multiple combinations, a system revenue corresponding to the combination is acquired, so as to determine a value of the inclination angle corresponding to system revenue and a configuration of the photovoltaic system corresponding to the value.

In step S3, system revenues corresponding to the multiple combinations are compared, so as to determine a final configuration of the photovoltaic system.

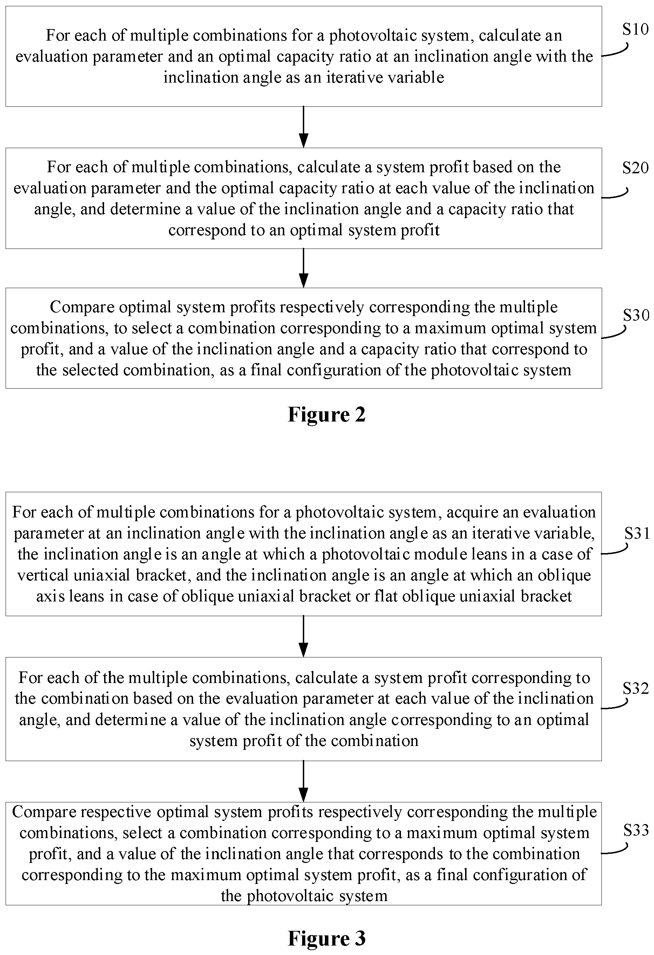

Reference is made to Figure 2, which is a flowchart illustrating a method for optimizing a photovoltaic system according to an embodiment of the present disclosure.

The method for optimizing a photovoltaic system according to this embodiment aims at an optimal system revenue. The method includes the following steps S10 to S30.

In step S 10, for each of multiple combinations of the photovoltaic system, an evaluation parameter and an optimal capacity ratio at an inclination angle are acquired by: calculating the evaluation parameter and the optimal capacity ratio at the inclination angle, where the inclination angle serves as an iterative variable for calculation.

In step S20, for each of the multiple combinations, a system revenue corresponding to the combination is calculated based on the evaluation parameter and the optimal capacity ratio at each value of the inclination angle, and a value of the inclination angle and a capacity ratio that correspond to an optimal system revenue of the combination are determined.

In step S30, optimal system revenues corresponding to the multiple combinations are compared. A combination corresponding to a maximum optimal system revenue, and a value of the inclination angle and a capacity ratio that correspond to the combination corresponding to the maximum optimal system revenue are selected, as the final configuration of the photovoltaic system.

In this embodiment, the combinations of the photovoltaic system are diverse, and each combination includes a type of a photovoltaic module, a type of an inverter, a manner in which the photovoltaic module is arranged, and a type of a photovoltaic bracket. The photovoltaic module includes a monocrystalline silicon photovoltaic module, a polycrystalline silicon photovoltaic module, and a double-glass photovoltaic module. The inverter includes a centralized inverter, a string inverter and a distributed inverter. The photovoltaic module is arranged of different horizontal and vertical components in an array, such as vertical one, vertical two, horizontal two, and horizontal four. The photovoltaic bracket includes a fixed bracket, an adjustable bracket, and a tracking bracket with various degrees of freedom. The combination for the photovoltaic system varies with a change of at least one of the type of the photovoltaic module, the type of the inverter, the manner in which the photovoltaic module is arranged, and the type of the photovoltaic bracket. The evaluation parameter includes an amount of radiation of on inclined plane, an amount of generated power, a floor area of a power station and a system cost.

In this embodiment, the method is performed as follows. 1. A combination for the photovoltaic system is selected. The combination includes the type of the photovoltaic module, the type of the inverter, the manner in which the photovoltaic module is arranged, and the type of the photovoltaic bracket. The amount of radiation of on the inclined plane, the amount of generated power, the floor area, the system cost and an optimal module-inverter capacity ratio of the photovoltaic system that correspond to the combination are calculated at the inclination angle, and the inclination angle serves as the iterative variable. 2. A value of the inclination angle corresponding to an optimal system revenue (for example, the internal rate of return IRR), which serves as an optimization goal, corresponding to the current combination, as well as a configuration of the photovoltaic system corresponding to the value of the inclination angle are acquired by comparison. 3. Another combination is selected and the above process is repeated to acquire an optimal system revenue of the photovoltaic system in this combination, until optimal system revenues corresponding to all combinations are acquired. 4. The optimal system revenues corresponding to all the combinations are compared, so as to determine the final configuration of the photovoltaic system.

In the embodiment, the value of the inclination angle for iteration may range from 0° to 90°, or 5° to 55°. Alternatively, the value of the inclination angle for iteration may be determined and optimized according to the actual situation of the project. An initial value of the inclination angle for iteration may be set to a minimum value within the range, and an iteration step size of the inclination angle may be set as required, for example, 1°. That is, the inclination angle of the photovoltaic module serves as the iterative variable. The inclination angle herein is an angle between the photovoltaic module and the ground. Variables such as the type of the photovoltaic module, the type of the inverter, the arrangement, the type of the photovoltaic bracket, the capacity ratio, the system cost, financial cost, and cost operation and maintenance are taken into consideration for iteration with the inclination angle as the iteration variable, so as to acquire the final configuration of the photovoltaic system.

In the embodiment, calculation of the evaluation parameter in step S1 includes the following steps S11 to S16.

In step S11, an amount of radiation received at an inclined plane of the photovoltaic module corresponding to the combination is calculated.

In step S12, the amount of power generated by the photovoltaic system corresponding to the combination is calculated.

In step S13, a floor area of the photovoltaic system corresponding to the combination is calculated.

In step S14, cost and an investment profit of the photovoltaic system corresponding to the combination are calculated.

In step S15, an optimal module-inverter capacity ratio of the photovoltaic system corresponding to the combination is calculated.

In step S16, the value of the inclination angle is increased by the iteration step size, such that an optimal system revenue (for example, the internal rate of return IRR) and the optimal capacity ratio at each inclination angle are acquired.

In step S11 according to the embodiment, the amount of radiation at the inclined plane of the photovoltaic module is a sum of an amount of direct radiation incident on the inclined plane, an amount of radiation scattered at the inclined plane, and an amount of radiation reflected from the ground.

The amount of direct radiation incident on the inclined plane is calculated as follows.

$$H_{bt} = DH$$

where,

$$D = \begin{cases} \max\{0, G(\omega_{ss}, \omega_{sr})\}, \omega_{ss} > \omega_{sr} \\ \max\{0, [G(\omega_{ss}, -\omega_s) + G(\omega_s, \omega_{sr})]\}, \omega_{ss} \leq \omega_{sr} \end{cases};$$

$$|\omega_{sr}| = \min\left[\omega_s, \cos^{-1}\frac{A_iB_i + C_i\sqrt{A_i^2 - B_i^2 + C_i^2}}{A^2 + C^2}\right];$$

$$\omega_{sr} = \begin{cases} -|\omega_{sr}|, (Ai > 0 \, and \, Bi > 0) \, or \, (Ai \geq Bi) \\ |\omega_{sr}|, other \end{cases};$$

$$|\omega_{ss}| = \min\left[\omega_s, \cos^{-1}\frac{A_iB_i - C_i\sqrt{A_i^2 - B_i^2 + C_i^2}}{A^2 + C^2}\right];$$

$$\omega_{ss} = \begin{cases} |\omega_{ss}|, (Ai > 0 \, and \, Bi > 0) \, or \, (Ai \geq Bi) \\ -|\omega_{ss}|, other \end{cases};$$

The G function is expressed as follows:

$$G_i(\omega_1, \omega_2) = \frac{1}{2d_i}\begin{bmatrix} \left(\dfrac{q_iA_i}{2} - p'_iB_i\right)(\omega 1 - \omega 2)\dfrac{\pi}{180} \\ +(p'_iA_i - q_iB_i)(\sin\omega_1 - \sin\omega_2) \\ -p'_iC_i(\cos\omega_1 - \cos\omega_2) \\ +(\dfrac{q_iA_i}{2})(\sin\omega_1\cos\omega_1 - \sin\omega_2\cos\omega_2) \\ +(\dfrac{q_iC_i}{2})(\sin^2\omega_1 - \sin^2\omega_2) \end{bmatrix}.$$

The following parameters are defined:

$$p'_i = p_i - \frac{H_d}{H_i}$$

$$p_i = 0.409 + 0.5016\sin(\omega_s - 60)$$

$$A_i = \cos\beta + \tan\varphi\cos\gamma\sin\beta$$

$$d_i = \sin\omega_s - \frac{\pi\omega_{si}}{180}\cos\omega_s$$

$$B_i = \cos\omega_s\cos\beta + \tan\delta\sin\beta\cos\gamma$$

$$C_i = \frac{\sin\beta \sin\gamma}{\cos\varphi}$$

where, $H$ represents an amount of global horizontal radiation, $H_{bt}$ represents radiation incident on an inclined plane, $H_i$ represents monthly horizontal radiation, $H_d$ represents monthly diffuse radiation, $\varphi$ represents a geographical latitude, $\beta$ represents an inclination angle of a photovoltaic module, $\gamma$ represents an azimuth of the photovoltaic module, $\omega_s$ represents an angle between sunlight and the horizontal plane, and is calculated from $\cos\omega_s = -\tan\varphi\tan\delta$, where a positive value of $\omega_s$ represents sunset and a negative value of $\omega_s$ represents sunrise, $\omega_{sr}$ represents an angle between sunlight and the inclined plane during sunrise, $\omega_{ss}$ represents an angle between sunlight and the inclined plane during sunset, and $\delta$ represents a declination angle of the sun.

The amount of radiation scattered at the inclined plane is calculated as follows.

$$H_{dt} = H_d \left[ \frac{H_b}{H_o} R_b + 0.5(1 - \frac{H_b}{H_o})(1 + \cos\beta) \right],$$

$$R_b = \frac{\cos(\varphi - \beta)\cos\delta \sin\omega'_s + (\frac{\pi}{180})\omega'_s \sin(\varphi - \beta)\sin\delta}{\cos\varphi \cos\delta \sin\omega_s + (\frac{\pi}{180})\omega_s \sin\varphi \sin\delta}$$

where, $H_{dt}$ represents diffuse radiation at the inclined plane, $\omega'_s$ represents an angle between sunlight and the inclined plane during sunset and is calculated from $\omega'_s = \min\{\omega_s, \cos^{-1}[-\tan(\varphi-\beta)\tan\delta]\}$.

The reflected radiation from the ground is calculated from $H_{rt} = 0.5\rho H(1-\cos\beta)$, where $H_{rt}$ represents reflection from the ground, $\rho$ represents surface reflectivity and varies with surfaces.

Therefore, the amount of radiation at the inclined plane is calculated from $H_t = H_{bt} + H_{dt} + H_{rt}$, where $H_t$ represents the amount of radiation at the inclined plane.

In the embodiment, in step S12, the amount of power generated on a surface of the photovoltaic module is calculated from $E = P \times H_t \times \eta/G_{stc}$, where E represents the amount of power generated on the surface of the photovoltaic module in the photovoltaic system, $P$ represents a total capacity of a photovoltaic panel, $\eta$ represents system efficiency, $G_{stc}$ represents global radiation in a standard state, and has a value of 1000W/m². The system efficiency $\eta$ depends on the type of the photovoltaic module, the type of the inverter and actual conditions of a location of the project. The system efficiency varies with the type of the photovoltaic module and the type of the inverter, such that amount of the generated power varies.

In the embodiment, in step S13, in a case that the photovoltaic module in the photovoltaic system is arranged facing south, only spacing between photovoltaic modules from south to north is taken into consideration in calculation of the total floor area of the power station. The calculation is based on a fact that the modules in front and rear rows are not shaded from 9:00 a.m. to 15:00 p.m. on the winter solstice. For the fixed bracket and the adjustable bracket, the total floor area of the photovoltaic system is calculated from:

$$S = (L_1 * \cos\beta + L_1 * \sin\beta \cos\gamma / \tan\alpha) * L_2$$

where, S represents the total floor area of the photovoltaic system, $\alpha$ represents a solar zenith angle, and $(L_1, L_2)$ represents dimensions of an array corresponding to the arrangement of module. A photovoltaic module may be arranged with a fixed inclination angle, an adjustable inclination angle or may be arranged to automatically track sunlight. In the case of fixed and adjustable inclination angles, the spacing between modules and the floor area of the photovoltaic system are calculated based on an annual maximum inclination angle.

Optimization for the fixed and adjustable inclination angles is performed by enumerating. That is, amounts of generated power corresponding to combinations of inclination angles of modules are compared with the inclination angles are adjusted the same number of times, to acquire a combination of inclination angles that corresponds to the largest amount of generated power under the number of times for adjustment. For example, in the current optimization, the fixed or adjustable inclination angle is adjusted twice, and all combinations of inclination angles throughout a year are enumerated, to acquire a combination of inclination angles corresponding to the largest annual amount of generated power. The acquired combination of inclination angles is saved and determined as a combination of inclination angles in this case where the inclination angles are adjusted twice in a year.

In the embodiment, in step S 14, the cost and the investment profit of the photovoltaic system are calculated based on the type of the photovoltaic module, the type of the inverter, the type of the photovoltaic bracket, a construction cost, a project cost, a land cost, a delivery cost, a cost of operation and maintenance, currency inflation and taxes.

In the embodiment, for each of combinations of meteorological environmental condition and various capacity ratios, an actual output power of the photovoltaic module corresponding to the combination is calculated, to acquire an optimal capacity ratio corresponding to the combination at each inclination angle of the photovoltaic system, which includes the following steps A to D.

In A, an actual output power of the photovoltaic module with a random amount of radiation and at a random temperature is calculated from:

$$P = P_{stc} \frac{G'}{G_{stc}} \left[ 1 + k(T_c - T_{stc}) \right]$$

P represents the actual output power of the photovoltaic module with a random amount of radiation and a random temperature. $P_{stc}$ represents a rated output power of the photovoltaic module. $T_{stc}$ represents an operating temperature of the photovoltaic module in the standard state, with a value of 25 degrees Celsius. $k$ represents a power temperature coefficient of the photovoltaic module. $G'$ represents actual irradiance (with a unit of W/m$^2$). $T_c$ represents an actual operating temperature of the photovoltaic module, and is calculated from $T_c = T_{air} + G' \frac{T_{cN} - T_{aN}}{G_{TN}} (1 - \frac{\eta 1}{\tau\beta})$. $T_{air}$ represents the ambient temperature. $T_{cN}$ represents a temperature of the photovoltaic module under an NOCT condition, and has a value of 273+45±2 (with a unit of K). $T_{aN}$ represents the ambient temperature under the NOCT condition, and has a value of 273+20 (with a unit of K). $G_{TN}$ represents the amount of radiation at a surface of the photovoltaic module under the NOCT condition, and has a value of 800 (with a unit of W/m2). $\eta 1$ represents a conversion rate of the photovoltaic module, and $\tau\beta$ is a constant with a value of 0.9.

In B, an actual output power of the inverter is calculated based on a rated output power of the inverter. A theoretical output power is equal to INT($\theta \times 10^6$/P$_{stc}$)$\times$P$\times\eta$/1000000, where $\theta$ represents the rated output power of the inverter. In a case that the theoretical output power is less than $\theta$, the actual output power is equal to the theoretical output power. In a case that the theoretical output power is greater than or equal to $\theta$, the actual output power is equal to $\theta$.

An example is given to illustrate a basic idea of calculating the actual output power of the inverter. For example, the rated output power of the inverter is equal to 1MW. In a case that photovoltaic modules are over-provision, the theoretical output power of the inverter is equal to INT(1000000/P$_{stc}$)$\times$P$\times\eta$/1000000. In a case that the theoretical output power is less than 1MW, the actual output power is equal to the theoretical output power. In a case that the theoretical output power is greater than or equal to 1MW, the actual output power is equal to 1 MW.

In C, system revenues of the photovoltaic system corresponding to different capacity ratios for the combination are calculated, and the system revenues are compared to determine the optimal capacity ratio.

In D, photovoltaic curtailment ratio is equal to [(theoretical output power-actual output power)/theoretical output power]$\times$100%.

The photovoltaic curtailment ratio is an important physical quantity for determining the capacity ratio, and is a system performance parameter reflecting the optimal module-inverter capacity ratio.

In the embodiment, the iteration step size in step S1 may be 1°. A value of the inclination angle and an optimal system revenue (for example, the internal rate of return IRR) corresponding to the value are acquired for each iteration. It should be understood that the iteration step size of the inclination angle may be another value different from 1, which is not limited herein. A small iteration step size of the inclination angle corresponds to an accurate final result. Those skilled in the art may strike a balance between a speed at which the iteration is performed and the accuracy of the result.

The technical solutions described above according to the present disclosure have the following beneficial effects. A method for optimizing a photovoltaic system aiming at an optimal system revenue is provided according to the present disclosure. The photovoltaic system is optimized with the aim of maximizing the system revenue that investors express most concern about, throughout the whole service life of the photovoltaic system. Factors such as a type of a device, a manner in which the photovoltaic module is arranged, the module-inverter capacitor ratio, the land cost and the cost of operation and maintenance that affecting the profit of the photovoltaic system are taken into consideration when performing automatic optimization, so as to arrive at an optimal configuration, thereby increasing the profit of the photovoltaic system. The results show that compared with the traditional method aiming at power generation, the profit can be increased by more than 1.06% with the method aiming at the optimal system revenue (for example, internal rate of return IRR). The increase in the profit is significant in areas with worse light resources. The method aiming at the optimal system revenue is vital for further reducing the cost of electricity and increasing the profit under the background of the photovoltaic bidding project currently.

In the above embodiments, the combination for the photovoltaic system is illustrated with the fixed bracket or the adjustable bracket serving as the photovoltaic bracket. The tracking bracket is described below, and the photovoltaic bracket is a vertical single axis tracking bracket, an oblique single axis tracking bracket, or a flat uniaxial bracket.

Reference is made to Figure 3, which is a flowchart illustrating a method for optimizing a photovoltaic system according to another embodiment of the present disclosure.

In the method for optimizing a photovoltaic system aiming at an optimal system revenue according to the present disclosure. The photovoltaic bracket includes a vertical single axis tracking bracket, an oblique single axis tracking bracket, and a flat uniaxial bracket. The method includes the following steps S21 to S23.

In S21, for each of multiple combinations for a photovoltaic system, an evaluation parameter is acquired at an inclination angle by calculating the evaluation parameter at the inclination angle, where the inclination angle serves as an iterative variable for calculation. In the case of vertical single axis tracking bracket, the inclination angle is an angle at which a photovoltaic module leans. In the case of oblique single axis tracking bracket or flat uniaxial bracket, the inclination angle is an angle at which an oblique axis leans.

In step S22, for each of the multiple combinations, a system revenue corresponding to the combination is calculated based on the evaluation parameter at each value of the inclination angle, and a value of the inclination angle corresponding to an optimal system revenue of the combination is determined.

In step S23, respective optimal system revenues of the multiple combinations are compared. A combination corresponding to a maximum optimal system revenue, and a value of the inclination angle that corresponds to the combination corresponding to the maximum optimal system revenue are selected, as the final configuration of the photovoltaic system.

Elements for the combination include a type of the photovoltaic module, a type of the inverter, a manner in which the photovoltaic module is arranged and a type of the photovoltaic bracket. The evaluation parameter includes an amount of radiation, an amount of generated power, a floor area of a power station and a system cost corresponding to the photovoltaic bracket.

Only the evaluation parameter is taken into consideration to calculate the system revenue in the above embodiments. In addition to the evaluation parameter, the optimal capacity ratio may also be taken into consideration, which is described in detailed below.

For each of multiple combinations of the photovoltaic system, an evaluation parameter and an optimal capacity ratio are acquired at an inclination angle by calculating the evaluation parameter and the optimal capacity ratio at the inclination angle, where the inclination angle serves as an iterative variable for calculation.

For each of the multiple combinations, a system revenue corresponding to the combination is calculated based on the evaluation parameter and the optimal capacity ratio at each value of the inclination angle, and a value of the inclination angle and a capacity ratio that correspond to an optimal system revenue of the combination are determined.

Respective optimal system revenues of the multiple combinations are compared. A combination corresponding to a maximum optimal system revenue, and a value of the inclination angle and a capacity ratio that correspond to the combination corresponding to the maximum optimal system revenue are selected, as the final configuration of the photovoltaic system.

Embodiments in which that the method according the present disclosure is applied to flat uniaxial, and biaxial brackets are illustrated below.

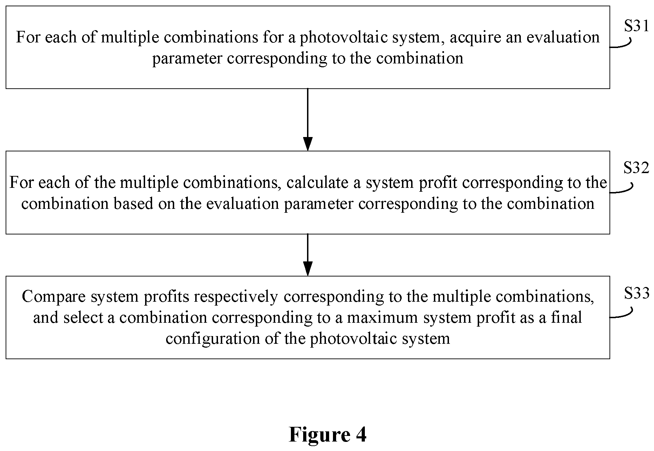

Reference is made to Figure 4, which is a flowchart illustrating a method for optimizing a photovoltaic system according to another embodiment of the present disclosure.

In the method for optimizing a photovoltaic system aiming at an optimal system according to this embodiment, the photovoltaic bracket of the photovoltaic system is a flat uniaxial bracket or a biaxial bracket. The biaxial bracket includes at least a flat biaxial bracket, a T-shaped biaxial bracket and a polar biaxial bracket. It should be understood that the biaxial bracket may further includes other types, which are not listed herein. The method includes the following steps S31 to S33.

In S31, for each of multiple combinations for the photovoltaic system, an evaluation parameter corresponding to the combination is acquired.

In S32, for each of multiple combinations, a system revenue corresponding to the combination is calculated based on the evaluation parameter corresponding to the combination.

In S33, system revenues corresponding to the multiple combinations are compared, and a combination corresponding to a maximum system revenue is selected as a final configuration of the photovoltaic system.

Elements for the combination include a type of the photovoltaic module, a type of the inverter, a manner in which the photovoltaic module is arranged and a type of the photovoltaic bracket. The evaluation parameter includes an amount of radiation, an amount of generated power, a floor area of a power station and a system cost corresponding to the photovoltaic bracket.

Only the evaluation parameter is taken into consideration to calculate the system revenue in the above embodiments. In addition to the evaluation parameter, the optimal capacity ratio may also be taken into consideration, which is described in detailed below.

For each of multiple combinations of the photovoltaic system, an evaluation parameter and an optimal capacity ratio that correspond to the combination are acquired by calculating the evaluation parameter and the optimal capacity ratio.

For each of the multiple combinations, a system revenue corresponding to the combination is calculated based on the evaluation parameter and the optimal capacity ratio that correspond to the combination, and a capacity ratio that corresponds to an optimal system revenue corresponding to the combination is determined.

Optimal system revenues corresponding to the multiple combinations are compared. A combination corresponding to a maximum optimal system revenue, and a capacity ratio that corresponds to the combination corresponding to the maximum optimal system revenue are selected, as the final configuration of the photovoltaic system.

Only preferred embodiments of the present disclosure are illustrated above. It should be pointed out that those skilled in the art may made various improvements and modifications without departing from the principle of the present disclosure, and these improvements and modifications should also fall in the protection scope of the present disclosure.

**Claims**

1. A method for optimizing a photovoltaic system aiming at an optimal system revenue, wherein a photovoltaic bracket of the photovoltaic system is a fixed bracket or an adjustable bracket, and the method comprises:

    S1, for each of a plurality of combinations for the photovoltaic system, acquiring an evaluation parameter and a capacity ratio at an inclination angle by calculating the evaluation parameter and the optimal capacity ratio at the inclination angle, wherein the evaluation parameter and the optimal capacity ratio are calculated with the inclination angle as an iterative variable;
    S2, according to the evaluation parameters and the capacity ratio of each of the plurality of combinations under different inclination angles, calculating system revenue of each combination, and determining the inclination angle and a capacity ratio corresponding to a optimal value of the system revenue of each combination; and
    S3, comparing system revenues corresponding to the plurality of combinations; and selecting a combination corresponding to a maximum system revenue, and a value of the inclination angle and a capacity ratio that correspond to the selected combination, as a final configuration of the photovoltaic system.

2. The method for optimizing a photovoltaic system aiming at an optimal system revenue according to claim 1, wherein each of the plurality of combinations comprises: a type of a photovoltaic module, a type of an inverter, a manner in which the photovoltaic module is arranged, a type of the photovoltaic bracket, and setting of the capacity ratio.

3. The method for optimizing a photovoltaic system aiming at an optimal system revenue according to claim 1, wherein the evaluation parameter comprises an amount of radiation on an inclined plane, an amount of generated power, a floor area of a power station and a system cost.

4. The method for optimizing a photovoltaic system aiming at an optimal system revenue according to claim 1, wherein the capacity ratio is a module-inverter ratio, and the calculating the optimal capacity ratio comprises:

    A, calculating an actual output power of a photovoltaic module corresponding to the combination with a random amount of radiation and at a random temperature;
    B, calculating an actual output power of an inverter corresponding to the combination based on a rated output power of the inverter; and
    C, calculating system revenues of the photovoltaic system corresponding to different capacity ratios for the combination, and comparing the system revenues to determine the optimal capacity ratio corresponding to the combination.

5. The method for optimizing a photovoltaic system aiming at an optimal system revenue according to claim 3, wherein the system revenue depends on all or part of a type of the photovoltaic module, a type of an inverter, a type of the photovoltaic bracket, a construction cost, a project cost, a land cost, a delivery cost, a cost of operation and maintenance, currency inflation and taxes.

6. The method for optimizing a photovoltaic system aiming at an optimal system revenue according to claim 1, wherein an iteration step size of the inclination angle is 1°.

7. The method for optimizing a photovoltaic system aiming at an optimal system revenue according to claim 2, wherein

    the photovoltaic module comprises a monocrystalline silicon photovoltaic module, a polycrystalline silicon photovoltaic module and a double-glass photovoltaic module;
    the inverter comprises a centralized inverter, a string inverter and a distributed inverter;
    the photovoltaic module is arranged in different horizontal and vertical components in an array; and
    the photovoltaic bracket comprises a fixed bracket, and an adjustable bracket.

8. The method for optimizing a photovoltaic system aiming at an optimal system revenue according to any one of claims 1 to 7, wherein
    in a case that the photovoltaic bracket is the adjustable bracket, the value of the inclination angle and the capacity ratio that correspond to the optimal system revenue are acquired by enumerating.

9. A method for optimizing a photovoltaic system aiming at an optimal system revenue, wherein the photovoltaic bracket is a vertical single axis tracking bracket, an oblique single axis tracking bracket, or a flat uniaxial bracket, and the method comprises:

    S1, for each of a plurality of combinations for the photovoltaic system, acquiring an evaluation parameter at an inclination angle by calculating the evaluation parameter at the inclination angle, wherein the evaluation parameter is calculated with the inclination angle as an iterative variable, the inclination angle is an angle at which a photovoltaic module leans in case of the vertical single axis tracking bracket, and the inclination angle is an angle at which an oblique axis leans in the case of oblique single axis tracking bracket or flat uniaxial bracket;
    S2, for each of the plurality of combinations, calculating a system revenue based on the evaluation parameter at the inclination angle, wherein the system revenue is calculated with the inclination angle as the iterative variable, and determining a value of the inclination angle corresponding to an optimal system revenue; and
    S3, comparing system revenues corresponding to the plurality of combinations; and selecting a combination corresponding to a maximum system revenue, and a value of the inclination angle corresponding to the selected combination, as a final configuration of the photovoltaic system.

10. The method for optimizing a photovoltaic system aiming at an optimal system revenue according to claim 9, wherein each of the plurality of combinations comprises: a type of a photovoltaic module, a type of an inverter, a manner in which the photovoltaic module is arranged, and a type of the photovoltaic bracket.

11. The method for optimizing a photovoltaic system aiming at an optimal system revenue according to claim 9 or 10, wherein
    the acquiring an evaluation parameter at an inclination angle by calculating the evaluation parameter at the inclination angle, wherein the evaluation parameter at the inclination angle are calculated with the inclination angle as an iterative variable comprises:

    acquiring the evaluation parameter and an optimal capacity ratio for the combination at the inclination angle by calculating the evaluation parameter and the optimal capacity ratio at the inclination angle, wherein the evaluation parameter and the optimal capacity ratio are calculated with the inclination angle as an iterative variable;
    the calculating a system revenue based on the evaluation parameter at the inclination angle comprises: calculating the system revenue for the combination based on the evaluation parameter and the optimal capacity ratio at the inclination angle; and
    the evaluation parameter comprises an amount of radiation, an amount of generated power, a floor area of a power station and a system cost that corresponding to the photovoltaic bracket.

12. A method for optimizing a photovoltaic system aiming at an optimal system revenue, wherein a photovoltaic bracket of the photovoltaic system is a flat uniaxial bracket or a biaxial bracket, and the method comprises:

    S1, for each of a plurality of combinations for the photovoltaic system, acquiring an evaluation parameter corresponding to the combination;
    S2, for each of the plurality of combinations, calculating a system revenue corresponding to the combination based on the evaluation parameter corresponding to the combination; and

S3, comparing system revenues corresponding to the plurality of combinations, and selecting a combination corresponding to a maximum system revenue, as a final configuration of the photovoltaic system.

13. The method for optimizing a photovoltaic system aiming at an optimal system revenue according to claim 12, wherein each of the plurality of combinations comprises: a type of a photovoltaic module, a type of an inverter, a manner in which the photovoltaic module is arranged, and a type of the photovoltaic bracket.

14. The method for optimizing a photovoltaic system aiming at an optimal system revenue according to claim 12 or 13, wherein
the acquiring an evaluation parameter corresponding to the combination comprises:

acquiring the evaluation parameter and an optimal capacity ratio corresponding to the combination;
the calculating a system revenue corresponding to the combination based on the evaluation parameter corresponding to the combination comprises: calculating the system revenue corresponding to the combination based on the evaluation parameter and the optimal capacity ratio that correspond to the combination; and
the evaluation parameter comprises an amount of radiation, an amount of generated power, a floor area of a power station and a system cost that corresponding to the photovoltaic bracket.

**Figure 1**

For each of multiple combinations for a photovoltaic system, calculate an evaluation parameter and an optimal capacity ratio at an inclination angle with the inclination angle as an iterative variable — S10

For each of multiple combinations, calculate a system profit based on the evaluation parameter and the optimal capacity ratio at each value of the inclination angle, and determine a value of the inclination angle and a capacity ratio that correspond to an optimal system profit — S20

Compare optimal system profits respectively corresponding the multiple combinations, to select a combination corresponding to a maximum optimal system profit, and a value of the inclination angle and a capacity ratio that correspond to the selected combination, as a final configuration of the photovoltaic system — S30

**Figure 2**

For each of multiple combinations for a photovoltaic system, acquire an evaluation parameter at an inclination angle with the inclination angle as an iterative variable, the inclination angle is an angle at which a photovoltaic module leans in a case of vertical uniaxial bracket, and the inclination angle is an angle at which an oblique axis leans in case of oblique uniaxial bracket or flat oblique uniaxial bracket — S31

For each of the multiple combinations, calculate a system profit corresponding to the combination based on the evaluation parameter at each value of the inclination angle, and determine a value of the inclination angle corresponding to an optimal system profit of the combination — S32

Compare respective optimal system profits respectively corresponding the multiple combinations, select a combination corresponding to a maximum optimal system profit, and a value of the inclination angle that corresponds to the combination corresponding to the maximum optimal system profit, as a final configuration of the photovoltaic system — S33

**Figure 3**

For each of multiple combinations for a photovoltaic system, acquire an evaluation parameter corresponding to the combination $\quad$ S31

For each of the multiple combinations, calculate a system profit corresponding to the combination based on the evaluation parameter corresponding to the combination $\quad$ S32

Compare system profits respectively corresponding to the multiple combinations, and select a combination corresponding to a maximum system profit as a final configuration of the photovoltaic system $\quad$ S33

**Figure 4**

## INTERNATIONAL SEARCH REPORT

| International application No. |
|---|
| **PCT/CN2021/103575** |

**A. CLASSIFICATION OF SUBJECT MATTER**

G06Q 10/04(2012.01)i; G06Q 50/06(2012.01)i; H02S 10/00(2014.01)i

According to International Patent Classification (IPC) or to both national classification and IPC

**B. FIELDS SEARCHED**

Minimum documentation searched (classification system followed by classification symbols)

G06Q10/-;; G06Q50/-;; H02S10/-

Documentation searched other than minimum documentation to the extent that such documents are included in the fields searched

Electronic data base consulted during the international search (name of data base and, where practicable, search terms used)

CNABS, CNTXT, VEN, CNKI: 光伏, 收益, 效益, 效率, 倾角, 斜角, 倾斜角度, 容配比, 容量配置比, 优化, 迭代, PHOTOVOLTAIC, PROFIT+, GAIN+, REVENUE+, INCOME+, RETURN+, BENEFIT+, EFFICIENC+, DIP ANGLE, TILT ANGLE, INCLINATION, BEVEL, OBLIQUE ANGLE, CAPACIT+, CAPABILIT+, VOLUME+, DISPOSIT+, DISTRIBUT+, CONFIGUR+, ALLOCAT+, PROPORT+, RATIO+, RATE, OPTIMIZ+, MAJORIZ+, ITERAT+

**C. DOCUMENTS CONSIDERED TO BE RELEVANT**

| Category* | Citation of document, with indication, where appropriate, of the relevant passages | Relevant to claim No. |
|---|---|---|
| PX | CN 111738526 A (ZHONGGUANGHE NEW ENERGY INVESTMENT (SHENZHEN) CO., LTD. et al.) 02 October 2020 (2020-10-02) description, paragraphs [0002]-[0021] and [0024]-[0096] | 1-14 |
| X | CN 110766198 A (POWERCHINA GROUP QINGHAI ELECTRIC POWER DESIGN INSTITUTE) 07 February 2020 (2020-02-07) description paragraphs [0087]-[0199] | 12-13 |
| Y | CN 110766198 A (POWERCHINA GROUP QINGHAI ELECTRIC POWER DESIGN INSTITUTE) 07 February 2020 (2020-02-07) description paragraphs [0087]-[0199] | 14 |
| Y | CN 105337307 A (BEIJING CORONA SCIENCE & TECHNOLOGY CO., LTD.) 17 February 2016 (2016-02-17) description, paragraphs [0003]-[0012] and [0021]-[0035] | 14 |
| A | CN 107546765 A (XINJIANG GOLDWIND SCIENCE TECHNOLOGY CO., LTD.) 05 January 2018 (2018-01-05) entire document | 1-14 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 August 2021** | **09 September 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/103575** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 109472394 A (CHINA ELECTRIC POWER RESEARCH INSTITUTE CO., LTD. et al.) 15 March 2019 (2019-03-15) entire document | 1-14 |
| A | CN 110490377 A (PHONO SOLAR TECHNOLOGY CO., LTD.) 22 November 2019 (2019-11-22) entire document | 1-14 |
| A | US 2014331198 A1 (SIEMENS AKTIENGESELLSCHAFT) 06 November 2014 (2014-11-06) entire document | 1-14 |

Form PCT/ISA/210 (second sheet) (January 2015)

## INTERNATIONAL SEARCH REPORT
### Information on patent family members

International application No.

**PCT/CN2021/103575**

| Patent document cited in search report | | | Publication date (day/month/year) | Patent family member(s) | | | Publication date (day/month/year) |
|---|---|---|---|---|---|---|---|
| CN | 111738526 | A | 02 October 2020 | None | | | |
| CN | 110766198 | A | 07 February 2020 | None | | | |
| CN | 105337307 | A | 17 February 2016 | CN | 105337307 | B | 07 November 2017 |
| CN | 107546765 | A | 05 January 2018 | None | | | |
| CN | 109472394 | A | 15 March 2019 | None | | | |
| CN | 110490377 | A | 22 November 2019 | None | | | |
| US | 2014331198 | A1 | 06 November 2014 | CN | 104254855 | A | 31 December 2014 |
| | | | | EP | 2786285 | A2 | 08 October 2014 |
| | | | | DE | 102012106124 | A1 | 29 May 2013 |
| | | | | US | 9465908 | B2 | 11 October 2016 |
| | | | | WO | 2013079282 | A2 | 06 June 2013 |
| | | | | CN | 104254855 | B | 20 April 2018 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010623222